# EUROPÄISCHE PATENTSCHRIFT

(11) **EP 3 214 321 B1**
(45) Veröffentlichungstag und Bekanntmachung des Hinweises auf die Patenterteilung: **12.08.2020**
(21) Anmeldenummer: 17157372.8
(22) Anmeldetag: 22.02.2017
(51) Int. Cl.: F16B 5/01, F16B 13/14, F16B 37/12

(54) **ANORDNUNG MIT EINER LEICHTBAUPLATTE UND EINEM DÜBEL SOWIE VERFAHREN ZUM EINSETZEN EINES DÜBELS IN EINE LEICHTBAUPLATTE**
ASSEMBLY WITH A LIGHTWEIGHT STRUCTURAL PANEL AND A DOWEL AND METHOD FOR INSTALLING A DOWEL IN A LIGHTWEIGHT STRUCTURAL PANEL
SYSTÈME COMPRENANT UN PANNEAU DE CONSTRUCTION LÉGER ET UNE CHEVILLE ET PROCÉDÉ D'INSERTION D'UNE CHEVILLE DANS UN PANNEAU DE CONSTRUCTION LÉGER

(30) Priorität: 01.03.2016 DE 102016203308
(43) Veröffentlichungstag der Anmeldung: 06.09.2017
(73) Patentinhaber: Adolf Würth GmbH & Co. KG, 74653 Künzelsau (DE); Würth International AG, 7000 Chur (CH)
(72) Erfinder: Eckert, Rainer, 97990 Weikersheim (DE); Reuther, Herbert, 74238 Gommersdorf (DE)
(74) Vertreter: Patentanwälte Ruff, Wilhelm, Beier, Dauster & Partner mbB

(56) Entgegenhaltungen:
- EP-A1- 0 273 515
- EP-A1- 2 902 557
- EP-A2- 1 298 331
- EP-A2- 2 213 888
- CN-A- 103 697 028
- DE-A1-102009 057 795
- DE-A1-102010 026 965
- DE-U1-202009 000 017
- US-A- 4 601 625
- US-A1- 2010 239 384

## Beschreibung

Die Erfindung betrifft eine Anordnung mit einer Leichtbauplatte und einem Dübel, wobei die Leichtbauplatte eine obere Deckplatte und eine untere Deckplatte aus kompaktem, drucksteifem Material und einen zwischen den Deckplatten angeordneten Kern aus Material mit gegenüber den Deckplatten geringerer Dichte aufweist, insbesondere Papierwaben oder Schaumstoff, wobei der Dübel einen Kopf und einen Schaft aufweist, wobei der Kopf eine von einer Oberseite des Kopfs her zugängliche Antriebsausbildung und eine Außenseite des Schafts ein Gewinde aufweist, wobei eine Oberseite des Kopfs eine erste Ebene definiert und wobei sich ein Aufnahmekanal für ein Befestigungsmittel durch den Kopf und wenigstens abschnittsweise durch den Schaft erstreckt.. Die Erfindung betrifft auch ein Verfahren zum Einsetzen eines Dübels in eine Leichtbauplatte.

Aus der deutschen Offenlegungsschrift DE 10 2009 057 795 A1 ist ein Verfahren zum Befestigen eines Beschlagelements an einer Leichtbauplatte bekannt. Ein Beschlagelement ist lasertransparent und besteht zumindest im Bereich einer Fügefläche aus thermoplastischem Kunststoff. Die Fügeflächen befinden sich auf der Oberseite einer oberen Deckplatte und auf der Innenseite einer unteren Deckplatte. Da das Beschlagelement lasertransparent ist und der Holzwerkstoff der oberen Deckplatte und der unteren Deckplatte laserabsorbierend ist, kann mittels eines Lasers der Holzwerkstoff im Bereich der Fügeflächen so stark erwärmt werden, dass das Beschlagelement aufschmilzt und eine stoffschlüssige Verbindung zwischen dem Beschlagelement und dem Holzwerkstoff der oberen und der unteren Deckplatte erzielt werden kann.

Aus der europäischen Offenlegungsschrift EP 2 213 888 A2 ist ein Dämmstoffhalter bekannt. Der Dämmstoffhalter weist an seinem Ende, das für das Einsetzen einer Schraube vorgesehen ist, ein Dämmstoffgewinde auf, das in den Dämmstoff eingeschraubt werden und darin Halt geben soll.

Aus der europäischen Offenlegungsschrift EP 1 298 331 A2 ist ein Schraubdübel zum Einschrauben in massive Leichtbaustoffe bekannt. Der Schraubdübel weist eine Bohrspitze und ein Gewinde auf seinem Schaft sowie einen Kopf auf. Der Schraubdübel wird in den Leichtbaustoff eingeschraubt, bis die Oberseite des Kopfes bündig mit der Oberseite des Leichtbaustoffs ist. Aus der deutschen Offenlegungsschrift DE 10 2010 026 965 A1 ist eine Spreizeinrichtung zum Einbringen in eine Bohrung in einem Sandwichmaterial bekannt. Das Sandwichmaterial weist ein vorderes und ein hinteres Blech auf, zwischen denen sandwichartig eine Metallschaumschicht aufgenommen ist. Die Spreizeinrichtung hat einen Hülsenmantel mit Innengewinde und an einem hinteren Endabschnitt der Spreizeinrichtung angeordnete Zinnen. Die Zinnen können radial nach außen auffedern, um dadurch über den Hülsenmantel hinaus abzukragen. Nach dem Einsetzen der Spreizeinrichtung in die Bohrung federn die Zinnen auf und verankern den Hülsenmantel im Sandwichmaterial. Ein vorderes Ende des Hülsenmantels kann mit einem zylindrischen Vorsprung versehen sein, der durch eine passende Bohrung in dem hinteren Blech geschoben wird. Der Hülsenmantel ist dann zwischen dem vorderen und dem hinteren Blech gehalten.

Mit der Erfindung soll die Möglichkeit geschaffen werden, Befestigungsmittel, insbesondere Schrauben, Schraubnägel und Nägel, zuverlässig und gegen hohe Auszugskräfte gesichert in Leichtbauplatten anordnen zu können.

Erfindungsgemäß ist hierzu eine Anordnung mit einer Leichtbauplatte und einem Dübel mit den Merkmalen von Anspruch 1 vorgesehen. Das der Erfindung zugrundeliegende Problem wird auch durch ein Verfahren mit den Merkmalen von Anspruch 13 gelöst. Die Leichtbauplatte weist eine obere Deckplatte und eine untere Deckplatte aus kompaktem, drucksteifem Material und einen zwischen den Deckplatten angeordneten Kern aus Material mit gegenüber den Deckplatten geringerer Dichte aufweist, insbesondere Papierwaben oder Schaumstoff, wobei der Dübel einen Kopf und einen Schaft aufweist, wobei der Kopf eine von einer Oberseite des Kopfes her zugängliche Antriebsausbildung und eine Außenseite des Schafts ein Gewinde aufweist, wobei eine Oberseite des Kopfs eine erste Ebene definiert, wobei sich ein Aufnahmekanal für ein Befestigungsmittel durch den Kopf und wenigstens abschnittsweise durch den Schaft erstreckt, dadurch gekennzeichnet, dass ein dem Kopf gegenüberliegendes Ende des Schafts eine ebene Anlagefläche aufweist, die zur ersten Ebene parallel ist.

Durch Vorsehen einer ebenen Anlagefläche an dem, dem Kopf gegenüberliegendem Ende wird die Möglichkeit geschaffen, diese Anlagefläche auf der Innenseite der unteren Deckplatte, insbesondere plan, aufzulegen und den Dübel dadurch innerhalb der Leichtbauplatte an zwei Stellen abzustützen. Zum einen ist der Kopf des Dübels in der oberen Deckplatte verankert. Zum anderen liegt das dem Kopf gegenüberliegende Ende des Schafts auf der Innenseite der unteren Deckplatte auf. Dadurch ist der Dübel zwischen den beiden Deckplatten gesichert und kann
eine sichere Befestigung, beispielsweise für eine Schraube, in der Leichtbauplatte bereitstellen. Alternativ liegt die ebene Anlagefläche nicht auf einer Innenseite der unteren Deckplatte, sondem auf einer Bodenfläche oder Absatzfläche einer Bohrung in der unteren Deckplatte auf. Beispielsweise wird vor dem Einsetzen des Dübels die Leichtbauplatte soweit angebohrt, dass die obere Deckplatte und der Kern vollständig durchbohrt sind und auch in der unteren Deckplatte noch ein Sackloch oder ein Sackloch mit einer Stufe vorhanden ist. Auf dem Boden des Sacklochs oder auf dieser Stufe kann die ebene Anlagefläche dann aufliegen. Eine solche Ausbildung hat den Vorteil, dass das dem Kopf gegenüberliegende Ende des Dübels in der Bohrung in der unteren Deckplatte aufgenommen ist und dadurch auch zuverlässig gegen Verkippen des Dübels gesichert ist. Die Länge des Dübels muss dabei auf die Leichtbauplatte abgestimmt sein. Es ist selbstverständlich auch möglich, die Leichtbauplatte vollständig zu durchbohren und das dem Kopf gegenüberliegende Ende des Dübels dann in der Durchgangsbohrung in der unteren Deckplatte anzuordnen. Eine solche Anordnung eines Dübels wird aber in der Regel aus ästhetischen Gründen abgelehnt.

In Weiterbildung der Erfindung ist das Gewinde als mehrgängiges Gewinde ausgebildet.

Mittels eines mehrgängigen Gewindes lässt sich ein besserer Halt an der oberen Deckplatte erzielen, da die Gewindeflanken mehrerer Gewindegänge an dem Material der oberen Deckplatte angreifen können.

In Weiterbildung der Erfindung ist das Gewinde als zweigängiges Gewinde ausgebildet.

In Weiterbildung der Erfindung ist ein Beginn der beiden Gewindegänge an dem, dem Kopf zugewandten Ende des Gewindes in Bezug auf eine Mittellängsachse des Schafts um 180° versetzt.

Auf diese Weise kann an zwei gegenüberliegenden Stellen an der oberen Deckplatte angegriffen werden. Dadurch können Kräfte an diesen beiden gegenüberliegenden Stellen in die Deckplatte eingeleitet werden.

In Weiterbildung der Erfindung beträgt eine Steigung des Gewindes zwischen 70 % und 90 % der Dicke der Leichtbauplatte.

Auf diese Weise kann der Dübel im Wesentlichen mittels einer einzigen Umdrehung in die Leichtbauplatte eingedreht werden. Der Dübel sitzt ja auf der unteren Deckplatte auf, so dass eine Steigung zwischen 70 % und 90 % der Dicke der Leichtbauplatte genügt, um den Dübel mit einer einzigen Umdrehung oder im Wesentlichen einer einzigen Umdrehung vollständig in die Leichtbauplatte einzusetzen.

In Weiterbildung der Erfindung ist das dem Kopf gegenüberliegende Ende des Schafts mit einem sich über die Anlagefläche hinaus erstreckenden Fortsatz versehen.

Ein solcher Fortsatz kann beispielsweise als zylindrischer Zapfen ausgebildet sein. Dieser Fortsatz kann dann in einer Bohrung in der unteren Deckplatte angeordnet werden. In einem solchen Fall ist die ebene Anlagefläche des Dübels als Ringfläche ausgebildet und kann auf der Innenseite der Deckplatte oder auf einem Absatz einer Stufenbohrung in der unteren Deckplatte aufliegen. Der Fortsatz ist dann in einer Sacklochbohrung in der unteren Deckplatte angeordnet. Auch hier kann anstelle einer Sacklochbohrung eine durchgehende Bohrung in der unteren Deckplatte angebracht werden, was aber aus optischen Gründen in der Regel nicht infrage kommt.

In Weiterbildung der Erfindung ist der Fortsatz an seiner Außenseite mit einem Gewinde versehen, wobei das Gewinde zum Eingreifen in die untere Deckplatte ausgebildet ist.

Auf diese Weise kann der Dübel sowohl in der oberen Deckplatte als auch in der unteren Deckplatte eingeschraubt beziehungsweise verankert werden. Dadurch wird eine besonders sichere Befestigung des Dübels, auch bei hohen Auszugskräften, möglich.

In Weiterbildung der Erfindung ist das Gewinde am Fortsatz als mehrgängiges Gewinde ausgebildet.

Auf diese Weise kann auch bei einem sehr kurzen Fortsatz ein Eingriff mehrerer Gewindegänge in das Material der unteren Deckplatte erzielt werden.

In Weiterbildung der Erfindung ist der Fortsatz als zylindrischer Zapfen ausgebildet.

Ein solcher zylindrischer Zapfen kann beispielsweise in einer Sacklochbohrung in der unteren Deckplatte angeordnet werden.

In Weiterbildung der Erfindung ist der Fortsatz rohrförmig mit offener Stirnseite ausgebildet.

Auf diese Weise kann der Fortsatz leichter in das Material der unteren Deckplatte eindringen, da lediglich der Bereich der Rohrwandung des rohrförmigen Fortsatzes beim Eindrehen des Dübels weggefräst oder verdrängt werden muss.

In Weiterbildung der Erfindung ist ein freies Ende des Fortsatzes mit einer Bohrspitze oder mit Fräsrippen versehen.

Auf diese Weise kann der Dübel sich seine Aufnahmebohrung in der Leichtbauplatte selbst schaffen und insbesondere kann mit dem freien Ende des Fortsatzes die untere Deckplatte beim Einsetzen des Dübels von der Innenseite her angebohrt werden. Auf diese Weise kann der Dübel selbst eine Aufnahmebohrung für sein, dem Kopf gegenüberliegendes Ende in der unteren Deckplatte schaffen. Beispielsweise kann der Fortsatz als zylindrischer Zapfen ausgebildet sein und eine Stirnfläche des zylindrischen Zapfens ist mit den Fräsrippen versehen.

In Weiterbildung der Erfindung ist eine Unterseite des Kopfes mit Sperrzähnen versehen, die einem Ausdrehen des Dübels entgegenwirken.

Auf diese Weise kann die Verankerung des Dübels in der oberen Deckplatte verbessert werden.

In Weiterbildung der Erfindung ist die Anlagefläche mit einem Klebstoffreservoir versehen.

Auf diese Weise kann die ebene Anlagefläche mit der Innenseite der unteren Deckplatte oder einer Bodenfläche oder Absatzfläche einer Bohrung in der unteren Deckplatte verklebt werden. Auf diese Weise ist eine besonders sichere Anordnung des Dübels in einer Leichtbauplatte möglich.

In Weiterbildung der Erfindung ist in dem Klebstoffreservoir mikrogekapselter Klebstoff angeordnet.

Mikrogekapselter Klebstoff tritt erst dann aus, wenn die Anlagefläche auf einer Innenseite der unteren Deckplatte oder auf einer Bodenfläche oder Absatzfläche einer Bohrung in der unteren Deckplatte aufliegt und dadurch die Mikrokapseln mit dem darin eingeschlossenen Klebstoff zerdrückt werden.

In Weiterbildung der Erfindung ist der Dübel aus Aluminiumdruckguss oder Kunststoff gebildet.

Auf diese Weise können beispielsweise Fräsrippen an dem Dübel vorgesehen sein, so dass der Dübel ohne Vorbohren in eine Leichtbauplatte eingesetzt werden kann. Solche Fräsrippen sind auch dann realisierbar, wenn der Dübel aus hartem Kunststoff besteht, wobei der Kunststoff in diesem Fall dann härter sein muss als eine Beschichtung der oberen Deckplatte und auch härter als das Material der oberen Deckplatte.

Erfindungsgemäß liegt die ebene Anlagefläche des Dübels auf einer Innenseite der unteren Deckplatte oder auf einer Bodenfläche oder Absatzfläche einer Bohrung in der unteren Deckplatte auf.

Bei einer solchen Anordnung ist der Dübel sowohl an der oberen Deckplatte als auch an der unteren Deckplatte abgestützt, so dass eine stabile und sichere Anordnung des Dübels erzielt werden kann.

In Weiterbildung der Erfindung ist das dem Kopf gegenüberliegende Ende des Schafts mit einem sich über die Anlagefläche hinaus erstreckenden Fortsatz versehen, wobei der Fortsatz in einer Bohrung in der unteren Deckplatte angeordnet ist.

Auf diese Weise kann der Fortsatz, der beispielsweise als zylindrischer Zapfen mit einem Außengewinde ausgebildet ist, in der unteren Deckplatte selbst angeordnet werden. Dadurch wird eine besonders sichere Anordnung des Dübels erreicht, die auch hohen Auszugskräften widersteht.

Bei einem erfindungsgemäßen Verfahren zum Einsetzen eines Dübels in eine Leichtbauplatte sind folgende Schritte vorgesehen: Aufsetzen des Dübels auf eine Oberseite der oberen Deckplatte der Leichtbauplatte, in Drehung Versetzen des Dübels, Herstellen einer Bohrung in der oberen Deckplatte, Einschrauben des Dübels in den Kern bis zum Aufsetzen der ebenen Anlagefläche des Dübels auf die Innenseite der unteren Deckplatte oder auf eine Bodenfläche oder Absatzfläche einer Bohrung in der unteren Deckplatte.

Bei dem erfindungsgemäßen Verfahren kann vorgebohrt werden oder der Dübel weist an seinem dem Kopf gegenüberliegenden Ende geeignete Ausbildungen auf, um sich selbst eine Bohrung in der Leichtbauplatte zu schaffen.

In Weiterbildung der Erfindung ist das Anbohren oder Auffräsen der unteren Deckplatte von der Innenseite her mittels einer Bohrspitze und/oder Fräsrippen an einem freien Ende eines Fortsatzes des Dübels vorgesehen, das Eindrehen des Gewindes an der Außenseite des Fortsatzes in die untere Deckplatte, bis die ebene Anlagefläche auf der Innenseite der unteren Deckplatte oder auf einer Bodenfläche oder Absatzfläche einer Bohrung in der unteren Deckfläche aufliegt.

In Weiterbildung der Erfindung ist das Vorbohren der Leichtbauplatte vor dem Eindrehen des Dübels vorgesehen.

In Weiterbildung der Erfindung ist das Ausbilden einer Sackbohrung in der unteren Deckplatte beim Vorbohren vorgesehen, wobei die Sackbohrung von einer Innenseite der unteren Deckplatte ausgeht.

In einer solchen Sackbohrung kann dann das untere Ende des Dübels oder ein Fortsatz des Dübels angeordnet werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, in den Zeichnungen dargestellten und beschriebenen Ausführungsformen lassen sich dabei in beliebiger Weise miteinander kombinieren, ohne den Rahmen der Erfindung zu überschreiten. In den Zeichnungen zeigen:
- Fig. 1: eine Seitenansicht eines Dübels gemäß einer ersten Ausführungsform,
- Fig. 2: eine Draufsicht auf den Dübel der Fig. 1,
- Fig. 3: eine Schnittansicht auf die Ebene III-III in Fig. 1,
- Fig. 4: einen Schnitt durch eine Anordnung mit einer Leichtbauplatte und einem Dübel gemäß Fig. 1,
- Fig. 5: eine Seitenansicht eines Dübels gemäß einer zweiten Ausführungsform,
- Fig. 6: eine Draufsicht auf den Dübel der Fig. 5,
- Fig. 7: eine Schnittansicht auf die Schnittebene VII-VII in Fig. 5,
- Fig. 8: eine Seitenansicht eines Dübels gemäß einer dritten Ausführungsform,
- Fig. 9: eine Draufsicht auf den Dübel der Fig. 8,
- Fig. 10: eine Ansicht auf die Schnittebene X-X in Fig. 8,
- Fig. 11: eine Seitenansicht eines Dübels gemäß einer vierten Ausführungsform,
- Fig. 12: eine Draufsicht auf den Dübel der Fig. 11,
- Fig. 13: eine Schnittansicht auf die Schnittebene XIII-XIII in Fig. 11,
- Fig. 14: eine Seitenansicht eines Dübels gemäß einer fünften Ausführungsform,
- Fig. 15: eine schematische Darstellung des Dübels der Fig. 14 im eingebauten Zustand,
- Fig. 16: eine Draufsicht auf die Anordnung der Fig. 15 und
- Fig. 17: eine Ansicht auf die Schnittfläche XVII-XVII in Fig. 16.

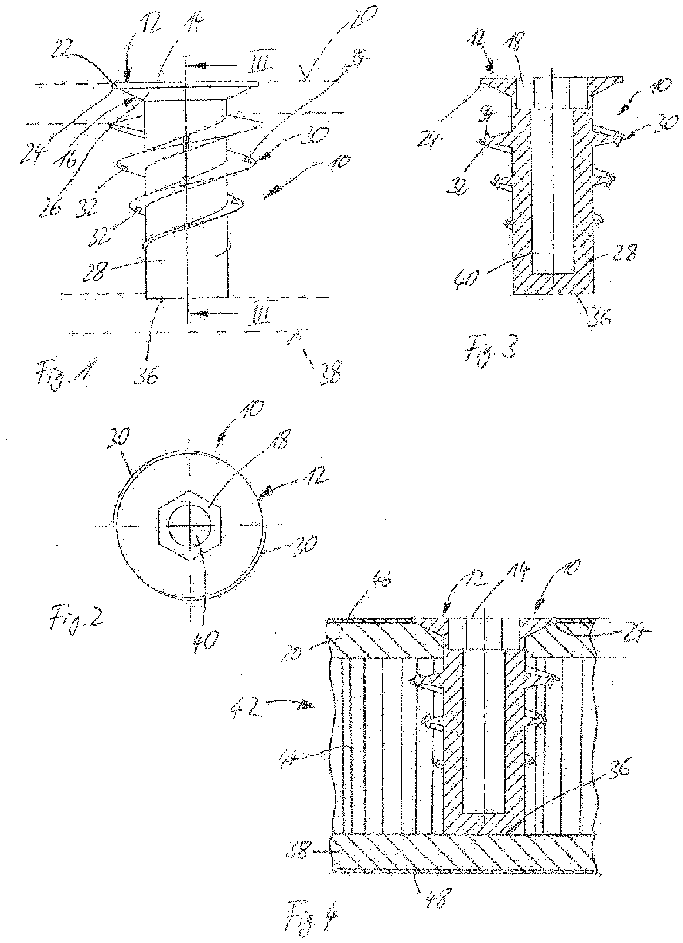

Die Darstellung der Fig. 1 zeigt einen Dübel 10, der dafür vorgesehen ist, in einer Leichtbauplatte verankert zu werden. Leichtbauplatten bestehen aus einer oberen Deckplatte und einer unteren Deckplatte, wobei zwischen den Deckplatten ein Kern mit geringer Dichte angeordnet ist. Ein solcher Kern besteht typischerweise aus Papierwaben, kann aber beispielsweise auch aus Schaumstoff bestehen. Die obere und die untere Deckplatte bestehen typischerweise aus einem HDF-Material aus hochdichter Faser. Die Außenseiten der Deckplatten sind üblicherweise noch beschichtet, beispielsweise mit einem Kunststoff, insbesondere Melamin. Solche Leichtbauplatten werden unter anderem im Möbelbau sowie auch für Ausbauten in Fahrzeugen verwendet. Aufgrund des Kerns mit geringer Dichte ist die Anordnung von Befestigungselementen, beispielsweise Schrauben, in solchen Leichtbauplatten problematisch. Üblicherweise werden Buchsen in solche Leichtbauplatten eingeklebt, die dann ein Befestigungselement, beispielsweise eine Schraube, eine Nagelschraube oder einen Nagel, aufnehmen.

Der Dübel 10 weist einen Kopf 12 mit einer Oberseite 14 und einer Unterseite 16 auf. Die Oberseite 14 ist mit einer in Fig. 1 nicht erkennbaren Antriebsausbildung 18 in Form eines Innensechskants 18 versehen, siehe Fig. 2. Die Oberseite 14 des Kopfs 12 ist im Übrigen eben ausgebildet und dafür vorgesehen, fluchtend zu einer gestrichelt angedeuteten Oberseite 20 einer Leichtbauplatte angeordnet zu werden.

Eine Unterseite des Kopfes weist zunächst einen schmalen, zylindrischen Abschnitt 22 auf, auf den eine um die Unterseite des Kopfes umlaufende Fräskante 24 folgt. Die Fräskante 24 ist dafür vorgesehen, eine Beschichtung auf der Oberseite 20 der Leichtbauplatte aufzufräsen und dadurch sicherzustellen, dass diese Beschichtung beim Einsetzen des Dübels nicht bricht.

Vielmehr kann mit der Fräskante 24 ein Loch mit scharfer, nicht ausgebrochener Kante in der Beschichtung auf der Oberseite 20 der Leichtbauplatte hergestellt werden.

Auf die Fräskante 24 folgt ein kegelstumpfförmiger Abschnitt 26, der sich bis zu einem zylindrischen Schaft 28 verjüngt.

Auf dem zylindrischen Schaft 28 ist ein Gewinde 30 angeordnet, das bei der dargestellten Ausführungsform vier Gewindegänge umfasst. Eine Höhe der Gewindeflanken des Gewindes 30 nimmt dabei kontinuierlich in Längsrichtung des Schafts 28 ab und das Gewinde endet vor dem freien Ende des Schafts 28.

Auf den Gewindeflanken des Gewindes 30 sind sowohl auf der dem Kopf 12 zugewandten Seite als auch auf der dem freien Ende des Schafts 28 zugewandten Seite Zacken 32, 34 angeordnet. Diese Zacken 32, 34 dienen dazu, den Kern der Leichtbauplatte beim Einschrauben des Dübels 10 anzureißen, um dadurch ein sauberes Eindringen des Dübels 10 zu gewährleisten.

Der Dübel 10 weist an dem Ende des Schafts 28, das dem Kopf 12 gegenüberliegt, eine ebene Anlagefläche 36 auf. Die Anlagefläche 36 erstreckt sich bei dem Dübel 10 über die gesamte Stirnfläche des Dübels 10. Die Anlagefläche 36 ist dafür vorgesehen, auf der Innenseite der unteren Deckplatte 38 der Leichtbauplatte aufzuliegen. Die obere Deckplatte 20 und die untere Deckplatte 38 sind in Fig. 1 gestrichelt angedeutet. Dabei ist zu beachten, dass links der Schnittebene III-III in Fig. 1 Deckplatten 20, 38 mit größerer Dicke angedeutet sind als rechts der Schnittebene III-III. Dies dient lediglich zur Verdeutlichung unterschiedlicher Anbringungsarten des Dübels 10.

Auf der in Fig. 1 linken Seite ist die Anlagefläche 36 an der Bodenfläche einer Sackbohrung in der unteren Deckplatte 38 angeordnet. Es ist gut zu erkennen, dass der Schaft 28 dadurch auch gegen seitliches Verschieben relativ zur unteren Deckplatte 38 gesichert ist.

Alternativ ist auf der rechten Seite in Fig. 1 angedeutet, dass die Anlagefläche 36 auf der Innenseite der unteren Deckplatte 38 aufsitzt. Durch die vergleichsweise große Anlagefläche 36, die die gesamte Stirnfläche des Schafts 28 einnimmt, wird auch dadurch ein Schutz gegen Verkippen des Dübels 10 erreicht.

Im Bereich des Kopfs ist ebenfalls links der Schnittebene III-III die Deckplatte 20 mit größerer Dicke angedeutet als rechts der Schnittebene III-III. In beiden Fällen ist aber das erfindungsgemäße Merkmal zu erkennen, dass die obere Deckplatte 20 zwischen der Unterseite 16 des Kopfs 12 und der, dem Kopf 12 zugewandten Gewindeflanke des ersten Gewindegangs des Gewindes 30 aufgenommen ist. Dadurch kann der Dübel 10 an der oberen Deckplatte 20 sehr zuverlässig gesichert werden. Gleichzeitig kann das Material der oberen Deckplatte 20 zwischen der Unterseite 16 des Kopfs 12 und der dem Kopf 12 zugewandten Gewindeflanke des ersten Gewindegangs komprimiert werden, wodurch die zuverlässige Verankerung des Dübels 10 unterstützt wird.

Zusammen mit der Abstützung an der unteren Deckplatte 38 über die ebene Anlagefläche 36 wird dadurch eine sehr stabile und gegen hohe Auszugskräfte und Kippmomente gesicherte Anordnung des Dübels 10 in der Leichtbauplatte erzielt.

Selbstverständlich muss die Länge des Dübels 10 genau auf die Abmessungen der Leichtbauplatte abgestimmt sein und insbesondere auch auf die Dicke der oberen Deckplatte 20 und der unteren Deckplatte 38. In jedem Fall ist sicherzustellen, dass der Dübel 10 zumindest bis zur Innenseite der unteren Deckplatte 38 geht, so dass der Schaft 28 des Dübels 10 über die ebene Anlagefläche 36 an der Innenseite der unteren Deckplatte 38 abgestützt werden kann.

Die Darstellung der Fig. 2 zeigt eine Draufsicht auf den Dübel 10 der Fig. 1. Zu erkennen ist die Antriebsausbildung 18 in Form eines Innensechskants. Innerhalb des Innensechskants 18 ist eine Aufnahmebohrung 40 im Schaft des Dübels zu erkennen. In diese Aufnahmebohrung 40 kann dann eine Schraube oder ein sonstiges Befestigungsmittel eingesetzt werden.

Es ist zu erkennen, dass sich in radialer Richtung der erste Gewindegang des Gewindes 30 geringfügig über den Außenumfang des Kopfs 12 hinaus erstreckt. Das Gewinde 30 ist als zweigängiges Gewinde ausgebildet und es ist zu erkennen, dass ein Beginn der beiden Gewindegänge in Bezug auf die Mittellängsachse des Schafts um 180° versetzt ist. Nach dem Einschrauben des Dübels greifen die beiden Gewindegänge des Gewindes 30 daher an gegenüberliegenden Stellen in das Material der oberen Deckplatte 20 und des Kerns 44 ein.

Die Darstellung der Fig. 3 zeigt eine Ansicht auf die Schnittebene III-III in Fig. 1. Zu erkennen ist die Aufnahmebohrung 40 im Dübel 10, die als Sackloch ausgebildet ist und die am Kopf 12 des Dübels von der Antriebsausbildung 18 in Form eines Innensechskants ausgeht.

Zu erkennen sind auch die Fräszacken 32, 34 auf den Gewindeflanken des Gewindes 30, die dem Kopf 12 zugewandt sind und auf den Gewindeflanken, die dem Kopf 12 abgewandt sind. In Fig. 3 ist weiter zu erkennen, dass die Höhe dieser Fräszacken 32, 34 zum freien Ende des Schafts 28 hin abnimmt. Wie bereits ausgeführt ist in Fig. 3 auch zu erkennen, dass eine Höhe des Gewindes 30, also die in radialer Richtung gemessene Höhe der einzelnen Gewindeflanken, in Richtung auf das freie Ende des Schafts 28 hin abnimmt. Das Gewinde endet somit vor dem freien Ende des Schafts 28 mit der Anlagefläche 36. Diese Gestaltung des Gewindes 30 erleichtert das Eindrehen des Dübels 10 in die Leichtbauplatte.

Die Darstellung der Fig. 4 zeigt eine Anordnung aus dem Dübel 10 der Fig. 1 und einer Leichtbauplatte 42. Die Leichtbauplatte 42 weist die obere Deckplatte 20 und die untere Deckplatte 38 auf. Zwischen der oberen und der unteren Deckplatte 20, 38 ist ein Kern 44 aus Papierwaben angeordnet. Die Außenseite der oberen Deckplatte 20 ist mit einer Kunststoffbeschichtung 46 versehen, genau wie die untere Deckplatte 38, deren Außenseite mit einer Kunststoffbeschichtung 48 versehen ist. Die Deckplatten 20, 38 selbst bestehen aus HDF-Material (hochdichte Faser).

In der Darstellung der Fig. 4 ist gut zu erkennen, dass die an der Unterseite des Kopfes 12 angeordnete Fräskante 24 die Kunststoffbeschichtung 46 gerade durchdrungen hat. Beim Eindrehen des Dübels 10 schneidet die Fräskante 24 die Kunststoffbeschichtung 46 an und sorgt dadurch für eine glatte Begrenzung einer Bohrung in der Leichtbauplatte 42.

Weiter ist in Fig. 4 zu erkennen, dass die Länge des Dübels 10 so auf die Dicke der Leichtbauplatte 42 abgestimmt ist, dass die Oberseite 14 des Kopfs 12 exakt mit der Oberseite der Kunststoffbeschichtung 46 der oberen Deckplatte 20 fluchtet. Die Anlagefläche 36 liegt wiederum auf der Innenseite der unteren Deckplatte 38 auf.

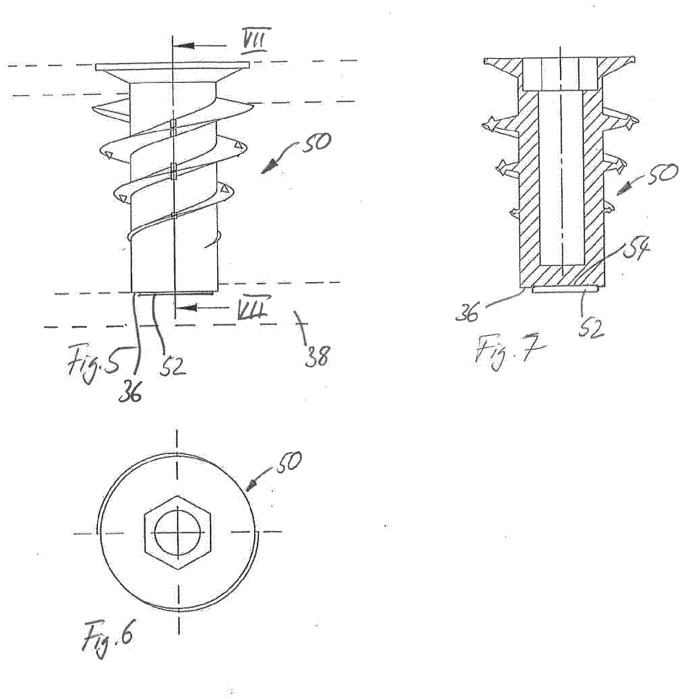

Die Darstellung der Fig. 5 zeigt einen Dübel 50 gemäß einer weiteren Ausführungsform der Erfindung. Der Dübel 50 unterscheidet sich von dem Dübel 10 der Fig. 1 bis 4 lediglich durch die Anordnung eines Klebstoffreservoirs 52 auf der Anlagefläche 36. Das Klebstoffreservoir 52 enthält mikrogekapselten Klebstoff. Beim Aufsetzen der Anlagefläche 36 auf die Innenseite der unteren Deckplatte 38 platzen die Mikrokapseln im Klebstoffreservoir 52 auf und setzen den Klebstoff dabei frei. Dadurch kann die ebene Anlagefläche 36 mit der Innenseite der unteren Deckplatte 38 oder einer Bodenfläche einer Bohrung in der unteren Deckplatte 38 verklebt werden. Dadurch kann der Dübel 50 noch sicherer in der Leichtbauplatte befestigt werden.

Auf der linken Seite der Schnittebene VII-VII in Fig. 5 ist die Leichtbauplatte mit einer geringeren Dicke der Deckplatten gezeigt als rechts der Schnittebene VII-VII. Lediglich die rechte Seite zeigt eine erfindungsgemäße Anordnung. Die Darstellung dient lediglich zur Verdeutlichung, dass die Anlagefläche 36 mit dem Klebstoffreservoir 52 auf die Innenseite der unteren Deckplatte 38 aufgesetzt werden kann oder dass von der Innenseite der unteren Deckplatte 38 her eine Bohrung in die untere Deckplatte 38 eingebracht werden kann, auf deren Bodenfläche dann die Anlagefläche 36 mit dem Klebstoffreservoir 52 aufsitzt.

Die Darstellung der Fig. 6 zeigt eine Draufsicht auf den Dübel 50 der Fig. 5.

Die Darstellung der Fig. 7 zeigt die Ansicht auf die Schnittebene VII-VII in Fig. 5. Zu erkennen ist, dass das Klebstoffreservoir 52 in einer kleinen Vertiefung 54 in der Stirnfläche des Dübels 50 angeordnet ist. Die Anlagefläche 36 hat bei dem Dübel 50 dadurch eine Ringform. Im Rahmen der Erfindung ist es aber ebenfalls möglich, das Klebstoffreservoir 52 auf eine Anlagefläche 36 aufzubringen, die die gesamte Stirnfläche des Dübels 50 bildet.

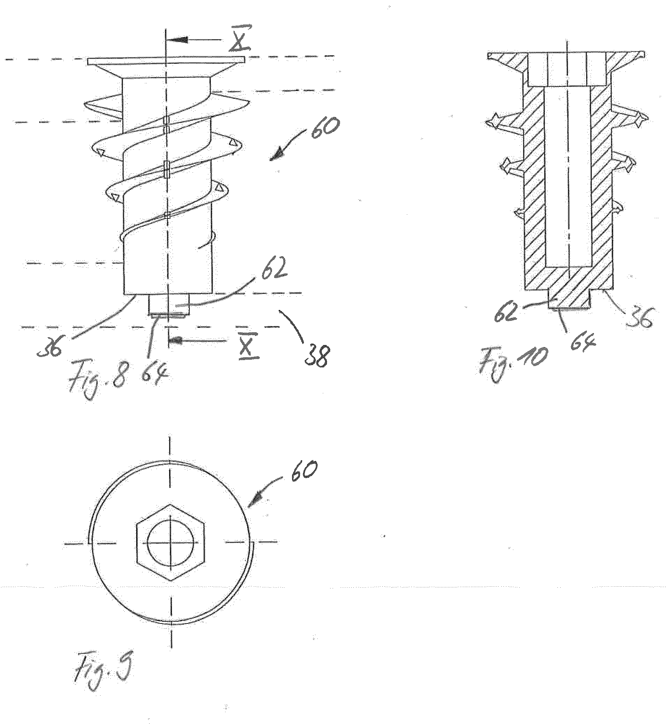

Die Darstellung der Fig. 8 zeigt einen weiteren Dübel 60. Der Dübel 60 unterscheidet sich von dem Dübel 10 der Fig. 1 bis 4 lediglich durch einen Fortsatz, der von der ebenen Anlagefläche 36 ausgeht und die Form eines zylindrischen Zapfens 62 hat. Der Zapfen 62 ist mit einem in Fig. 8 nicht erkennbaren Außengewinde versehen.

Eine Stirnfläche des Zapfens 62 kann mit Fräsrippen 64 versehen sein, die in Fig. 8 lediglich schematisch angedeutet sind. Mit diesen Fräsrippen kann von der Innenseite der unteren Deckplatte 38 her eine Bohrung in der unteren Deckplatte 38 angeordnet werden. In dieser Bohrung wird dann der zylindrische Zapfen 62 angeordnet. Beim Eindrehen des Dübels 60 greift dabei das Gewinde an der Außenseite des zylindrischen Zapfens 62 in die Wände der Bohrung in der unteren Deckplatte 38 ein. Dadurch kann eine besonders sichere Befestigung des Dübels 60 in der Leichtbauplatte erzielt werden.

In Fig. 8 ist links der Schnittebene X-X die Leichtbauplatte mit dickeren Deckplatten dargestellt als in der erfindungsgemäßen Anordnung rechts der Schnittebene X-X. Auf der in Fig. 8 linken Seite ist in der unteren Deckplatte 38 eine Stufenbohrung eingebracht. Auf einer Absatzfläche dieser Stufenbohrung sitzt die Anlagefläche 36 auf. Der Teil der Stufenbohrung mit geringerem Durchmesser dient zur Aufnahme des zylindrischen Zapfens 62.

Auf der in Fig. 8 rechten Seite sitzt die Anlagefläche 36 auf der Innenseite der unteren Deckplatte 38 auf und der zylindrische Zapfen 62 ist in einer Bohrung angeordnet, die von der Innenseite der unteren Deckplatte 38 ausgeht.

Fig. 9 zeigt eine Draufsicht auf den Dübel 60 der Fig. 8 und Fig. 10 zeigt eine Ansicht auf die Schnittebene X-X in Fig. 8.

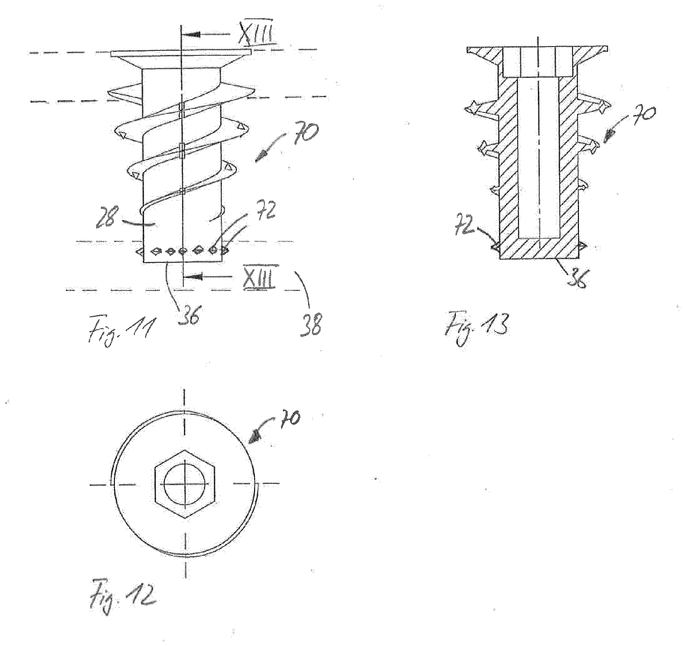

Die Darstellung der Fig. 11 zeigt eine weitere Ausführungsform eines Dübels 70.

Der Dübel 70 unterscheidet sich von dem Dübel 10 der Fig. 1 bis 4 lediglich durch das Vorsehen eines Rings aus Fräszacken 72 auf dem Umfang des zylindrischen Zapfens 28, wobei der Ring aus den Fräszacken 72 kurz vor dem freien Ende des Schafts 28 angeordnet ist.

Die Fräszacken 72 dienen dazu, die untere Deckplatte 38 von der Innenseite her aufzufräsen und das freie Ende des Schafts 28 des Dübels 70 dadurch besonders sicher in der unteren Deckplatte 38 zu verankern. Die Anlagefläche 36 liegt in diesem Fall auf der Bodenfläche einer Bohrung, die von der Innenseite der unteren Deckplatte 38 ausgeht.

Die Darstellung der Fig. 12 zeigt eine Draufsicht auf den Dübel 70 der Fig. 11.

Fig. 13 zeigt eine Ansicht auf die Schnittebene XIII-XIII in Fig. 11.

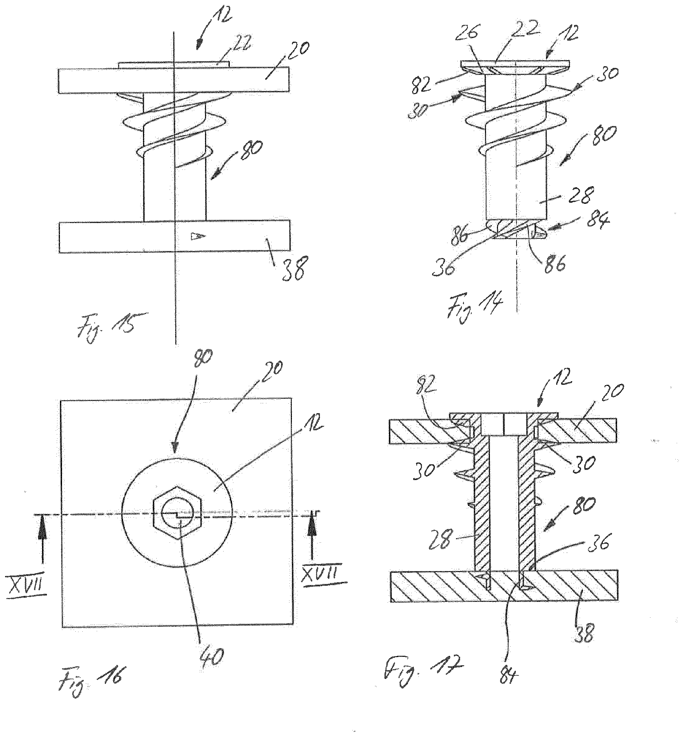

Fig. 14 zeigt einen Dübel 80 für eine Anordnung gemäß einer weiteren Ausführungsform der Erfindung. Der Dübel 80 weist einen Kopf 12, einen zylindrischen Schaft 28 und ein zweigängiges Gewinde 30 auf dem Schaft 28 auf, wobei eine Höhe der Gewindeflanken der beiden Gewindegänge des Gewindes 30 in Richtung vom Kopf 12 weg abnimmt.

Der Schaft 28 ist zylindrisch ausgebildet und die Kopfunterseite 26 ist kegelstumpfförmig ausgebildet. Auf der Kopfunterseite 26 sind Fräsrippen 82 vorgesehen, die einen etwa dreieckförmigen Querschnitt aufweisen und in radialer Richtung vom Schaft 28 auf der kegelstumpfförmigen Unterseite 26 des Kopfs 12 zum Rand 22 des Kopfs 12 verlaufen. Die Fräsrippen 82 sorgen dafür, dass der Kopf 12 beim Eindrehen des Dübels ein Stück weit in der oberen Deckplatte 20 versenkt werden kann. Im Übrigen sind das Gewinde 30, der Kopf 12 und der Schaft 28 gleich wie bei dem bereits anhand der Fig. 1 bis 4 beschriebenen Dübel 10 ausgebildet und werden daher nicht erneut im Detail erläutert.

Der Dübel 80 weist an dem Ende des Schafts 28, das dem Kopf 12 abgewandt ist, einen rohrförmigen Fortsatz 84 auf. Dieser rohrförmige Fortsatz 84 ist auf seiner Außenseite mit einem zweigängigen Gewinde 86 versehen. Die Steigung des Gewindes 86 ist im Wesentlichen gleich groß wie die Steigung des Gewindes 30. Die Steigung des Gewindes 30 beträgt etwa 70 % bis 90 % der Dicke der Leichtbauplatte, in die der Dübel 80 eingesetzt werden soll. Dies ermöglicht es, den Dübel 80 mit im Wesentlichen einer einzigen Umdrehung in die Leichtbauplatte einzusetzen.

Eine in Fig. 14 unten liegende Stirnseite des Fortsatzes 84, die also das untere Ende des Dübels 80 definiert, ist dabei offen, siehe auch Fig. 17. Der Fortsatz 34 kann dadurch beim Einschrauben des Dübels vergleichsweise leicht in das Material der unteren Deckplatte 38 eindringen, da lediglich das vor der Wandung des rohrförmigen Fortsatzes 84 liegende Material weggefräst oder verdrängt werden muss.

Fig. 15 zeigt schematisch die Anordnung des Dübels 80 in einer Leichtbauplatte mit einer oberen Deckplatte 20 und einer unteren Deckplatte 38. Ein Kern der Leichtbauplatte ist der Übersichtlichkeit halber nicht dargestellt. Der Dübel 80 wird so weit in die Leichtbauplatte eingeschraubt, bis lediglich noch der Rand 22 des Kopfs 12 über die Oberseite der oberen Deckplatte 20 hinausragt. Es ist im Rahmen der Erfindung dabei ohne weiteres möglich, den Dübel 80 so zu gestalten, dass dieser vollständig in der oberen Deckplatte 20 versenkt werden kann.

Der rohrförmige Fortsatz 84 dringt vollständig in die untere Deckplatte 38 ein, so dass er in der Darstellung der Fig. 15 nicht mehr zu erkennen ist. Das Ende des Schafts 28, von dem der Fortsatz 84 ausgeht, bildet eine ebene Anlagefläche 36, die in montiertem Zustand auf der Innenseite der unteren Deckplatte 38 aufliegt.

Fig. 16 zeigt eine Draufsicht auf die Anordnung der Fig. 15. Zu erkennen ist lediglich die obere Deckplatte 20 sowie der Kopf 12 des Dübels 80 mit der Antriebsausbildung in Form eines Innensechskants. Die Bohrung 40 im Dübel 80 dient, wie bereits erläutert wurde, zum Einbringen einer Befestigungsschraube, mit der dann ein Gegenstand an der Leichtbauplatte befestigt werden kann.

Fig. 17 zeigt reine erfindungsgemäße Anordnung in einer Ansicht auf die Schnittfläche XVII-XVII in Fig. 16. Zu erkennen ist hier, dass die Vorsprünge 82 auf der Unterseite des Kopfs 12 in das Material der oberen Deckplatte 20 eingedrungen sind. Die beiden Gewindegänge des zweigängigen Gewindes 30 liegen an um 180° versetzten Stellen auf der Innenseite der oberen Deckplatte 20 an. Der Dübel 80 wird dadurch sicher an der oberen Deckplatte 20 gehalten, indem nämlich die obere Deckplatte 20 zwischen den beiden Gewindegängen des Gewindes 30 und der Unterseite des Kopfs 12 eingespannt ist.

Fig. 17 ist weiter zu entnehmen, dass die ebene Anlagefläche 36 am unteren Ende des Schafts 28 auf der Innenseite der unteren Deckplatte 38 aufliegt.

Weiter ist zu erkennen, dass der rohrförmige Absatz 84 in das Material der unteren Deckplatte 38 eingedrungen ist. Innerhalb des rohrförmigen Fortsatzes 84 ist dabei noch das Material der unteren Deckplatte 38 stehen geblieben.

Der Dübel 80 wird, wie erläutert wurde, dadurch an der oberen Deckplatte 20 gehalten, dass die beiden Gewindegänge des Gewindes 30 und die Unterseite des Kopfs 12 die obere Deckplatte 20 zwischen sich aufnehmen. Zusätzlich wird der Dübel 80 mittels des Gewindes 30 im Kern der Leichtbauplatte verankert, die der Einfachheit halber in den Fig. 15 bis 17 nicht dargestellt ist. Darüber hinaus liegt die ebene Anlagefläche 36 auf der Innenseite der unteren Deckplatte 38 auf und stabilisiert dadurch den Dübel 80 gegen Kippbewegungen relativ zu den beiden Deckplatten 20, 38. Schließlich dringt der rohrförmige Fortsatz 84 in das Material der unteren Deckplatte 38 ein und verankert den Dübel 80 dadurch sicher in der unteren Deckplatte 38. Mittels des Dübels 80 kann dadurch auch in Leichtbauplatten eine sichere Verankerungsmöglichkeit für Befestigungsschrauben geschaffen werden.

## Patentansprüche

1. Anordnung mit:
- einer Leichtbauplatte (42), die eine obere Deckplatte (20) und eine untere Deckplatte (38) aus kompaktem, drucksteifem Material und einen zwischen den Deckplatten (20, 38) angeordneten Kern (44) aus Material mit gegenüber den Deckplatten geringer Dichte aufweist, insbesondere Papierwaben oder Schaumstoff, und
- einem Dübel (10; 50; 60; 70) für Leichtbauplatten, der einen Kopf (12) und einen Schaft (28) aufweist, wobei der Kopf (12) eine von einer Oberseite (14) des Kopfs (12) her zugängliche Antriebsausbildung (18) und eine Außenseite des Schafts (28) ein Gewinde (30) aufweist, wobei eine Oberseite (14) des Kopfs (12) eine erste Ebene definiert, wobei sich ein Aufnahmekanal (40) für ein Befestigungsmittel durch den Kopf (12) und wenigstens abschnittsweise durch den Schaft (28) erstreckt, wobei ein dem Kopf (12) gegenüberliegendes Ende des Schafts (28) eine ebene Anlagefläche (36) aufweist, die zur ersten Ebene parallel ist,
**dadurch gekennzeichnet, dass**
- die obere Deckplatte (20) zwischen einer Unterseite (16) des Kopfs (12) und einer, dem Kopf (12) zugewandten Gewindeflanke des ersten Gewindegangs des Gewindes (30) aufnehmbar ist, so dass das Material der oberen Deckplatte (20) zwischen der Unterseite (16) des Kopfs (12) und der dem Kopf (12) zugewandten Gewindeflanke des ersten Gewindegangs komprimiert werden kann, und
- die ebene Anlagefläche (36) auf einer Innenseite der unteren Deckplatte (38) oder auf einer Bodenfläche oder Absatzfläche einer Bohrung in der unteren Deckplatte (38) aufliegt und dass die obere Deckplatte (20) zwischen der Unterseite (16) des Kopfs (12) und der, dem Kopf (12) zugewandten Gewindefläche des ersten Gewindegangs des Gewindes (30) aufgenommen ist, so dass das Material der oberen Deckplatte (20) zwischen der Unterseite (16) des Kopfs (12) und der dem Kopf (12) zugewandten Gewindeflanke des ersten Gewindegangs komprimiert ist.

2. Anordnung nach Anspruch 1, **dadurch gekennzeichnet, dass** das Gewinde als mehrgängiges, insbesondere zweigängiges, Gewinde ausgebildet ist.

3. Anordnung nach einem der vorstehenden Ansprüche, **dadurch gekennzeichnet, dass** eine Steigung des Gewindes (30) zwischen 70% und 90% der Dicke der Leichtbauplatte (42) beträgt.

4. Anordnung nach einem der vorstehenden Ansprüche, **dadurch gekennzeichnet, dass** das dem Kopf (12) gegenüberliegende Ende des Schafts (28) mit einem sich über die Anlagefläche hinauserstreckenden Fortsatz (62) versehen ist.

5. Anordnung nach Anspruch 4, **dadurch gekennzeichnet, dass** der Fortsatz (62) an seiner Außenseite mit einem Gewinde versehen ist, wobei das Gewinde zum Eingreifen in die untere Deckplatte (38) ausgebildet ist.

6. Anordnung nach einem der Ansprüche 4 bis 5, **dadurch gekennzeichnet, dass** der Fortsatz (62) als zylindrischer Zapfen ausgebildet ist.

7. Anordnung nach einem der Ansprüche 4 bis 5, **dadurch gekennzeichnet, dass** der Fortsatz rohrförmig mit offener Stirnseite ausgebildet ist.

8. Anordnung nach einem der Ansprüche 4 bis 7, **dadurch gekennzeichnet, dass** ein freies Ende des Fortsatzes (62) mit einer Bohrspitze oder mit Fräsrippen (64) versehen ist.

9. Anordnung nach einem der vorstehenden Ansprüche, **dadurch gekennzeichnet, dass** eine Unterseite des Kopfes (12) mit Sperrzähnen versehen ist, die einem Ausdrehen des Dübels entgegenwirken.

10. Anordnung nach einem der vorstehenden Ansprüche, **dadurch gekennzeichnet, dass** die Anlagefläche (36) mit einem Klebstoffreservoir (52), insbesondere mit mikrogekapseltem Klebstoff, versehen ist.

11. Anordnung nach einem der vorstehenden Ansprüche, **dadurch gekennzeichnet, dass** der Dübel (10; 50; 60; 70) aus Aluminiumdruckguss oder Kunststoff gebildet ist.

12. Anordnung nach einem der vorstehenden Ansprüche, **dadurch gekennzeichnet, dass** das dem Kopf (12) gegenüberliegende Ende des Schafts (28) mit einem sich über die Anlagefläche (36) hinaus erstreckenden Fortsatz (62) versehen ist, wobei der Fortsatz (62) in einer Bohrung in der unteren Deckplatte (38) angeordnet ist.

13. Verfahren zum Einsetzen eines Dübels für Leichtbauplatten in eine Leichtbauplatte (42), wobei die Leichtbauplatte (42) eine obere Deckplatte (20) und eine untere Deckplatte (38) aus kompaktem, drucksteifem Material und einen zwischen den Deckplatten (20, 38) angeordneten Kern (44) aus Material mit gegenüber den Deckplatten geringer Dichte aufweist, insbesondere Papierwaben oder Schaumstoff, wobei der Dübel (10; 50; 60; 70) einen Kopf (12) und einen Schaft (28) aufweist, wobei der Kopf (12) eine von einer Oberseite (14) des Kopfs (12) her zugängliche Antriebsausbildung (18) und eine Außenseite des Schafts (28) ein Gewinde (30) aufweist, wobei eine Oberseite (14) des Kopfs (12) eine erste Ebene definiert, wobei sich ein Aufnahmekanal (40) für ein Befestigungsmittel durch den Kopf (12) und wenigstens abschnittsweise durch den Schaft (28) erstreckt, wobei ein dem Kopf (12) gegenüberliegendes Ende des Schafts (28) eine ebene Anlagefläche (36) aufweist, die zur ersten Ebene parallel ist, wobei die obere Deckplatte (20) zwischen einer Unterseite (16) des Kopfs (12) und einer, dem Kopf (12) zugewandten Gewindeflanke des ersten Gewindegangs des Gewindes (30) aufnehmbar ist, so dass das Material der oberen Deckplatte (20) zwischen der Unterseite (16) des Kopfs (12) und der dem Kopf (12) zugewandten Gewindeflanke des ersten Gewindegangs komprimiert werden kann, mit folgenden Schritten: Aufsetzen des Dübels (10'; 50; 60; 70) auf eine Oberseite der oberen Deckplatte (20) der Leichtbauplatte (42), in Drehung Versetzen des Dübels (10; 50; 60; 70), Herstellen einer Bohrung in der oberen Deckplatte (20), Einschrauben des Dübels (10; 50; 60; 70) in den Kern (44) bis zum Aufsetzen der ebenen Anlagefläche (36) des Dübels (10; 50; 60; 70) auf die Innenseite der unteren Deckplatte (38) oder auf eine Bodenfläche oder Absatzfläche einer Bohrung in der unteren Deckplatte (38), wobei beim Einschrauben des Dübels die obere Deckplatte (20) zwischen der Unterseite des Kopfs (12) und der, dem Kopf (12) zugewandten Gewindeflanke des ersten Gewindegangs des Gewindes (30) aufgenommen wird, so dass das Material der oberen Deckplatte (20) zwischen der Unterseite (16) des Kopfs (12) und der dem Kopf (12) zugewandten Gewindeflanke des ersten Gewindegangs komprimiert wird.

14. Verfahren nach Anspruch 13, **gekennzeichnet durch** Anbohren oder Auffräsen der unteren Deckplatte (38) von der Innenseite her mittels einer Bohrspitze und/oder Fräsrippen (64) an einem freien Ende eines Fortsatzes (62) des Dübels (60), Eindrehen des Gewindes (30) an der Außenseite des Fortsatzes (62) in die untere Deckplatte (38) bis die ebene Anlagefläche (36) auf der Innenseite der unteren Deckplatte (38) oder auf einer Bodenfläche oder Absatzfläche einer Bohrung in der unteren Deckfläche (38) aufliegt.

15. Verfahren nach Anspruch 13 oder 14, **gekennzeichnet durch** Vorbohren der Leichtbauplatte (42) vor dem Eindrehen des Dübels (10; 50; 60; 70).

16. Verfahren nach Anspruch 15, **gekennzeichnet durch** Ausbilden einer Sackbohrung, wobei die Sackbohrung von einer Innenseite der unteren Deckplatte (38) ausgeht, beim Vorbohren.

## Claims

1. Assembly, comprising:
- a lightweight structural panel (42) including an upper cover plate (20) and a lower cover plate (38) made of compact pressure-resistant material and, arranged between the cover plates (20, 38), a core (44) made of material having a lower density than the cover plates, in particular paper honeycombs or foamed material, and
- a dowel (10; 50; 60; 70) for lightweight structural panels having a head (12) and a shaft (28), wherein the head (12) has a drive arrangement (18) accessible from a top side (14) of the head (12) and an outer side of the shaft (28) has a thread (30), wherein a top side (14) of the head (12) defines a first plane, wherein a receiving channel (40) for a fastening means extends through the head (12) and at least in sections through the shaft (28), wherein an end of the shaft (28), located opposite to the head (12), has a planar abutment surface (36) which is parallel to the first plane,
**characterized in that**
- the upper cover plate (20) is receivable between a bottom side (16) of the head (12) and a thread flank of the first thread pitch of the thread (30) facing the head (12) such that the material of the upper cover plate (20) can be compressed between the bottom side (16) of the head (12) and the thread flank of the first thread pitch facing the head (12), and
- the planar abutment surface (36) rests on an inner side of the lower cover plate (38) or on a bottom surface or a shoulder surface of a bore in the lower cover plate (38), and **in that** the upper cover plate (20) is received between the bottom side (16) of the head (12) and the thread surface of the first thread pitch of the thread (30) facing the head (12) such that the material of the upper cover plate (20) is compressed between the bottom side (16) of the head (12) and the thread flank of the first thread pitch facing the head (12).

2. Assembly according to claim 1, **characterized in that** the thread is a multi-start thread, in particular a double thread.

3. Assembly according to any of the preceding claims, **characterized in that** a pitch of the thread (30) is between 70% and 90% of the thickness of the lightweight structural panel (42).

4. Assembly according to any of the preceding claims, **characterized in that** the end of the shaft (28), located opposite to the head (12), is provided with a prolongation (62) extending beyond the abutment surface.

5. Assembly according to claim 4, **characterized in that** the prolongation (62) is provided with a thread on its outer side, wherein the thread is configured for engaging in the lower cover plate (38).

6. Assembly according to any of the claims 4 to 5, **characterized in that** the prolongation (62) is in the form of a cylindrical pin.

7. Assembly according to any of the claims 4 to 5, **characterized in that** the prolongation is tubular with an open end face.

8. Assembly according to any of the claims 4 to 7, **characterized in that** a free end of the prolongation (62) is provided with a drill bit or with milling ribs (64).

9. Assembly according to any of the preceding claims, **characterized in that** a bottom side of the head (12) is provided with ratchets to counteract unscrewing of the dowel.

10. Assembly according to any of the preceding claims, **characterized in that** the abutment surface (36) is provided with an adhesive reservoir (52), in particular holding adhesive in microcapsules.

11. Assembly according to any of the preceding claims, **characterized in that** the dowel (10; 50; 60; 70) is composed of die-cast aluminium or synthetic material.

12. Assembly according to any of the preceding claims, **characterized in that** the end of the shaft (28), located opposite to the head (12), is provided with a prolongation (62) extending beyond the abutment surface (36), wherein the prolongation (62) is disposed in a bore in the lower cover plate (38).

13. Method for inserting a dowel for lightweight structural panels in a lightweight structural panel (42), wherein the lightweight structural panel (42) includes an upper cover plate (20) and a lower cover plate (38) made of compact pressure-resistant material and, arranged between the cover plates (20, 38), a core (44) made of material having a lower density than the cover plates, in particular paper honeycombs or foamed material, wherein the dowel (10; 50; 60; 70) has a head (12) and a shaft (28), wherein the head (12)) has a drive arrangement (18) accessible from a top side (14) of the head (12) and an outer side of the shaft (28) has a thread (30), wherein a top side (14) of the head (12) defines a first plane, wherein a receiving channel (40) for a fastening means extends through the head (12) and at least in sections through the shaft (28), wherein an end of the shaft (28), located opposite to the head (12), has a planar abutment surface (36) which is parallel to the first plane, wherein the upper cover plate (20) is receivable between a bottom side (16) of the head (12) and a thread flank of the first thread pitch of the thread (30) facing the head (12) such that the material of the upper cover plate (20) can be compressed between the bottom side (16) of the head (12) and the thread flank of the first thread pitch facing the head (12), comprising the following steps:
placing the dowel (10; 50; 60; 70) on a top side of the upper cover plate (20) of the lightweight structural panel (42), causing the dowel (10; 50; 60; 70) to turn, producing a bore in the upper cover plate (20), screwing the dowel (10; 50; 60; 70) into the core (44) until the planar abutment surface (36) of the dowel (10; 50; 60; 70) contacts the inner side of the lower cover plate (38) or a bottom surface or shoulder surface of a bore in the lower cover plate (38), wherein during screwing in of the dowel the upper cover plate (20) is received between the bottom side of the head (12) and the thread flank of the first thread pitch of the thread (30) facing the head (12) such that the material of the upper cover plate (20) is compressed between the bottom side (16) of the head (12) and the thread flank of the first thread pitch facing the head (12).

14. Method according to claim 13, **characterized by** drilling or milling the lower cover plate (38) from the inner side using a drill bit and/or milling ribs (64) on a free end of a prolongation (62) of the dowel (60), screwing the thread (30) on the outer side of the prolongation (62) into the lower cover plate (38) until the planar abutment surface (36) rests on the inner side of the lower cover plate (38) or on a bottom surface or a shoulder surface of a bore in the lower cover plate (38).

15. Method according to claim 13 or 14, **characterized by** pre-drilling of the lightweight structural panel (42) prior to screwing in of the dowel (10; 50; 60; 70).

16. Method according to claim 15, **characterized by** producing a blind-hole bore, wherein the blind-hole bore starts from an inner side of the lower cover plate (38), during the pre-drilling procedure.

## Revendications

1. Système comprenant :
- un panneau de construction léger (42) qui comprend un panneau de recouvrement supérieur (20) et un panneau de recouvrement inférieur (38) constitués d'une matière compacte rigide à la pression et une âme (44) disposée entre les panneaux de recouvrement (20, 38) et constituée d'une matière de densité moindre par rapport aux panneaux de recouvrement, en particulier de papier alvéolaire ou de mousse synthétique, et
- une cheville (10 ; 50 ; 60 ; 70) pour panneaux de construction légers, laquelle comprend une tête (12) et une tige (28), la tête (12) comprenant une formation d'entraînement (18) accessible à partir d'un côté supérieur (14) de la tête (12) et un côté extérieur de la tige (28) comprenant un filetage (30), un côté supérieur (14) de la tête (12) définissant un premier plan, un canal de réception (40) pour un moyen de fixation s'étendant à travers la tête (12) et au moins dans certaines parties à travers la tige (28), une extrémité de la tige (28) opposée à la tête (12) comprenant une surface d'appui plane (36) qui est parallèle au premier plan,
**caractérisé en ce que**
- le panneau de recouvrement supérieur (20) peut être reçu entre un côté inférieur (16) de la tête (12) et un flanc de filetage, tourné vers la tête (12), de la première spire du filetage (30), de sorte que la matière du panneau de recouvrement supérieur (20) puisse être comprimée entre le côté inférieur (16) de la tête (12) et le flanc de filetage, tourné vers la tête (12), de la première spire, et
- la surface d'appui plane (36) repose sur un côté intérieur du panneau de recouvrement inférieur (38) ou sur une surface de base ou surface d'épaulement d'un alésage dans le panneau de recouvrement inférieur (38) et **en ce que** le panneau de recouvrement supérieur (20) est reçu entre le côté inférieur (16) de la tête (12) et la surface de filetage, tournée vers la tête (12), de la première spire du filetage (30), de sorte que la matière du panneau de recouvrement supérieur (20) soit comprimée entre le côté inférieur (16) de la tête (12) et le flanc de filetage, tourné vers la tête (12), de la première spire.

2. Système selon la revendication 1, **caractérisé en ce que** le filetage est réalisé sous forme de filetage à plusieurs filets, en particulier à deux filets.

3. Système selon l'une des revendications précédentes, **caractérisé en ce qu'**un pas du filetage (30) représente entre 70% et 90% de l'épaisseur du panneau de construction léger (42).

4. Système selon l'une des revendications précédentes, **caractérisé en ce que** l'extrémité de la tige (28) opposée à la tête (12) est dotée d'un prolongement (62) s'étendant au-delà de la surface d'appui.

5. Système selon la revendication 4, **caractérisé en ce que** le prolongement (62) est doté d'un filetage sur son côté extérieur, le filetage étant réalisé pour venir en prise dans le panneau de recouvrement inférieur (38).

6. Système selon l'une des revendications 4 et 5, **caractérisé en ce que** le prolongement (62) est réalisé sous forme d'ergot cylindrique.

7. Système selon l'une des revendications 4 et 5, **caractérisé en ce que** le prolongement est réalisé de manière tubulaire avec un côté frontal ouvert.

8. Système selon l'une des revendications 4 à 7, **caractérisé en ce qu'**une extrémité libre du prolongement (62) est dotée d'une pointe de perçage ou de nervures de fraisage (64).

9. Système selon l'une des revendications précédentes, **caractérisé en ce qu'**un côté inférieur de la tête (12) est doté de dents de blocage qui s'opposent à un dévissage de la cheville.

10. Système selon l'une des revendications précédentes, **caractérisé en ce que** la surface d'appui (36) est dotée d'un réservoir d'adhésif (52), en particulier d'un adhésif microencapsulé.

11. Système selon l'une des revendications précédentes, **caractérisé en ce que** la cheville (10 ; 50 ; 60 ; 70) est formée à partir d'aluminium moulé sous pression ou de matière synthétique.

12. Système selon l'une des revendications précédentes, **caractérisé en ce que** l'extrémité de la tige (28) opposée à la tête (12) est dotée d'un prolongement (62) s'étendant au-delà de la surface d'appui (36), le prolongement (62) étant disposé dans un alésage dans le panneau de recouvrement inférieur (38).

13. Procédé d'insertion d'une cheville pour panneaux de construction légers dans un panneau de construction léger (42), le panneau de construction léger (42) comprenant un panneau de recouvrement supérieur (20) et un panneau de recouvrement inférieur (38) constitués d'une matière compacte rigide à la pression et une âme (44) disposée entre les panneaux de recouvrement (20, 38) et constituée d'une matière de densité moindre par rapport aux panneaux de recouvrement, en particulier de papier alvéolaire ou de mousse synthétique, la cheville (10 ; 50 ; 60 ; 70) comprenant une tête (12) et une tige (28), la tête (12) comprenant une formation d'entraînement (18) accessible à partir d'un côté supérieur (14) de la tête (12) et un côté extérieur de la tige (28) comprenant un filetage (30), un côté supérieur (14) de la tête (12) définissant un premier plan, un canal de réception (40) pour un moyen de fixation s'étendant à travers la tête (12) et au moins dans certaines parties à travers la tige (28), une extrémité de la tige (28) opposée à la tête (12) comprenant une surface d'appui plane (36) qui est parallèle au premier plan, le panneau de recouvrement supérieur (20) pouvant être reçu entre un côté inférieur (16) de la tête (12) et un flanc de filetage, tourné vers la tête (12), de la première spire du filetage (30), de sorte que la matière du panneau de recouvrement supérieur (20) puisse être comprimée entre le côté inférieur (16) de la tête (12) et le flanc de filetage, tourné vers la tête (12), de la première spire, comprenant les étapes suivantes : placer la cheville (10' ; 50 ; 60 ; 70) sur un côté supérieur du panneau de recouvrement supérieur (20) du panneau de construction léger (42), mettre en rotation la cheville (10 ; 50 ; 60 ; 70), produire un alésage dans le panneau de recouvrement supérieur (20), visser la cheville (10 ; 50 ; 60 ; 70) dans l'âme (44) jusqu'au placement de la surface d'appui plane (36) de la cheville (10 ; 50 ; 60 ; 70) sur le côté intérieur du panneau de recouvrement inférieur (38) ou sur une surface de base ou surface d'épaulement d'un alésage dans le panneau de recouvrement inférieur (38), le panneau de recouvrement supérieur (20) étant, lors du vissage de la cheville, reçu entre le côté inférieur de la tête (12) et le flanc de filetage, tourné vers la tête (12), de la première spire du filetage (30), de sorte que la matière du panneau de recouvrement supérieur (20) soit comprimée entre le côté inférieur (16) de la tête (12) et le flanc de filetage, tourné vers la tête (12), de la première spire.

14. Procédé selon la revendication 13, **caractérisé par** le perçage ou le fraisage du panneau de recouvrement inférieur (38) à partir du côté intérieur au moyen d'une pointe de perçage et/ou de nervures de fraisage (64) à une extrémité libre d'un prolongement (62) de la cheville (60), le vissage du filetage (30) sur le côté extérieur du prolongement (62) dans le panneau de recouvrement inférieur (38) jusqu'à ce que la surface d'appui plane (36) repose sur le côté intérieur du panneau de recouvrement inférieur (38) ou sur une surface de base ou surface d'épaulement d'un alésage dans la surface de recouvrement inférieure (38).

15. Procédé selon la revendication 13 ou 14, **caractérisé par** le préperçage du panneau de construction léger (42) avant le vissage de la cheville (10 ; 50 ; 60 ; 70).

16. Procédé selon la revendication 15, **caractérisé par** la réalisation d'un alésage borgne, l'alésage borgne partant d'un côté intérieur du panneau de recouvrement inférieur (38), lors du préperçage.
